# FASCICULE DE BREVET EUROPEEN

(11) **EP 3 831 632 B1**
(45) Date de publication et mention de la délivrance du brevet: **19.10.2022**
(21) Numéro de dépôt: 20207098.3
(22) Date de dépôt: 12.11.2020
(51) Int. Cl.: B60K 1/04

(54) **VÉHICULE AUTOMOBILE ÉQUIPÉ D'UNE BATTERIE FIXÉE SUR UNE TRAVERSE DE TRAIN ARRIÈRE**
KRAFTFAHRZEUG, DAS MIT EINER AUF EINEM QUERTRÄGER EINER HINTERACHSE FIXIERTEN BATTERIE AUSGESTATTET IST
MOTOR VEHICLE PROVIDED WITH A BATTERY ATTACHED TO A REAR END CROSSMEMBER

(30) Priorité: 03.12.2019 FR 1913637
(43) Date de publication de la demande: 09.06.2021
(73) Titulaire: PSA Automobiles SA, 78300 Poissy (FR)
(72) Inventeur: FORTUNE, LAURENT, 78300 POISSY (FR); LE FLOCH, BERTRAND, 91140 VILLEBON SUR YVETTE (FR); MICHEL, THIERRY, 78110 LE VESINET (FR)

(56) Documents cités:
- EP-A1- 0 001 725
- DE-A1-102015 115 408
- DE-A1-102015 218 793
- US-A1- 2013 180 791
- US-A1- 2019 276 080

## Description

La présente invention concerne un véhicule équipé d'une batterie disposée sur le train arrière, ainsi qu'un procédé de montage de la batterie sur un tel véhicule.

Un type de véhicule hybride connu, présenté notamment par le document FR-A1-3049920, comporte suivant sa direction longitudinale, en avant d'une traverse du train arrière une batterie haute tension d'alimentation d'une machine électrique de traction, au niveau de cette traverse un réservoir de carburant, et en arrière de la traverse une batterie basse tension d'alimentation du réseau de bord. Un silencieux d'échappement disposé transversalement, est fixé en arrière de la batterie basse tension.

Cette disposition permet d'occuper un espace sous le plancher du coffre arrière du véhicule autour de la traverse, pour installer des équipements venant sur un véhicule hybride en plus de ceux utilisés sur un véhicule à moteur thermique seul.

Le document DE102015218793A1 montre par ailleurs un véhicule automobile équipé d'une batterie posée sur un support fixé sur le côté d'une traverse de train arrière disposée sous un plancher de coffre arrière de ce véhicule.

Par ailleurs certains véhicules comportent une batterie de servitude ou auxiliaire basse tension, prévue pour alimenter des équipements, présentant des caractéristiques particulières, notamment pour supporter des charges et des décharges lentes mais importantes. La batterie de servitude vient en plus de la batterie du réseau de bord nécessaire pour délivrer une intensité élevée au démarreur du moteur thermique.

Dans une configuration du véhicule la batterie de servitude peut être posée sur un support qui est fixé sur le côté arrière d'une traverse du train arrière. Dans ce cas le support peut présenter suivant la direction longitudinale du véhicule une longueur prévue pour recevoir un type de batterie, en la maintenant suffisamment sur cette longueur.

Cependant sur un même modèle de véhicule on peut réaliser différentes versions de systèmes électriques, comprenant une version avec une batterie de tension plus élevée présentant des dimensions plus importantes.

Pour une batterie plus longue suivant la direction longitudinale, on a alors des problèmes de tenue de cette batterie comportant une partie en porte-à-faux dépassant vers l'arrière du support. Dans ce cas lors du roulage les accélérations verticales de la caisse du véhicule génèrent des contraintes élevées sur la batterie et le support, pouvant entraîner des dommages.

La présente invention a notamment pour but d'éviter ces problèmes de l'art antérieur.

Elle propose à cet effet un véhicule automobile équipé d'une batterie posée sur un support fixé sur le côté d'une traverse de train arrière disposée sous un plancher de coffre arrière de ce véhicule, ce véhicule étant remarquable en ce qu'il comporte une barrette de soutien démontable comprenant une extrémité supérieure fixée au plancher de coffre, et une extrémité inférieure reliée à un côté de la batterie.

Un avantage de ce véhicule est que la barrette de soutien constitue un moyen simple et économique permettant de reprendre verticalement le poids sur un côté de la batterie, notamment du côté opposé à la traverse, qui n'est pas soutenu par ce support dans le cas où il est trop court.

La barrette démontable disposée verticalement forme un soutien complémentaire venant en plus du support fixé sur la traverse, qui peut être retiré afin de faire coulisser la batterie horizontalement sur son support pour la retirer ou la remettre en position lors d'opérations de maintenance.

En particulier on peut prévoir un support de batterie standard court suffisant pour recevoir une petite batterie qui est entièrement portée par ce support, et dans le cas d'une batterie plus longue ajouter la barrette de soutien qui maintient le côté de la batterie se trouvant à l'extérieur du support. De cette manière on garde un véhicule standard recevant en option la barrette de soutien.

Le véhicule automobile selon l'invention peut comporter de plus une ou plusieurs des caractéristiques suivantes, qui peuvent être combinées entre elles.

En particulier, le support peut comporter un plateau recevant la batterie qui dépasse de ce plateau du côté de la barrette.

Dans ce cas, le plateau étant fixé suivant la direction longitudinale du véhicule, sur le côté arrière de la traverse, la batterie peut dépasser en arrière de ce plateau.

Avantageusement, l'extrémité supérieure de la barrette est fixée à un perçage d'une tôle formant le plancher du coffre.

Avantageusement, la barrette présentant une section plate, s'ajuste dans le perçage qui présente une forme oblongue.

De plus, avantageusement la partie supérieure de la barrette comporte des échancrures permettant une rotation de cette barrette suivant son axe principal, en engageant la tôle du plancher dans ces échancrures.

De plus, avantageusement la tôle du plancher comporte un creux qui reçoit entièrement la tête supérieure de la barrette au-dessus des échancrures après sa rotation.

Avantageusement, le perçage constitue un trou d'évacuation d'un fluide lors de traitements de la caisse du véhicule après son assemblage.

En particulier, la batterie peut constituer une batterie de servitude du système électrique du véhicule qui s'ajoute à une batterie du réseau de bord. L'invention a aussi pour objet un procédé de montage d'une batterie sur un véhicule comprenant l'une quelconque des caractéristiques précédentes, remarquable en ce qu'on glisse la batterie sur un plateau du support, on introduit ensuite une barrette plate dans un perçage oblong du plancher du coffre arrière, puis on tourne la barrette suivant son axe principal pour ajuster des bords du perçage dans des échancrures de la barrette, et enfin on fixe la partie inférieure de la barrette sur la batterie.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue de côté de l'arrière d'un véhicule selon l'invention ;
[Fig. 2] est une vue de dessus du plancher de coffre de ce véhicule ; et
[Fig. 3] est une vue arrière de la batterie équipée de la barrette de soutien.

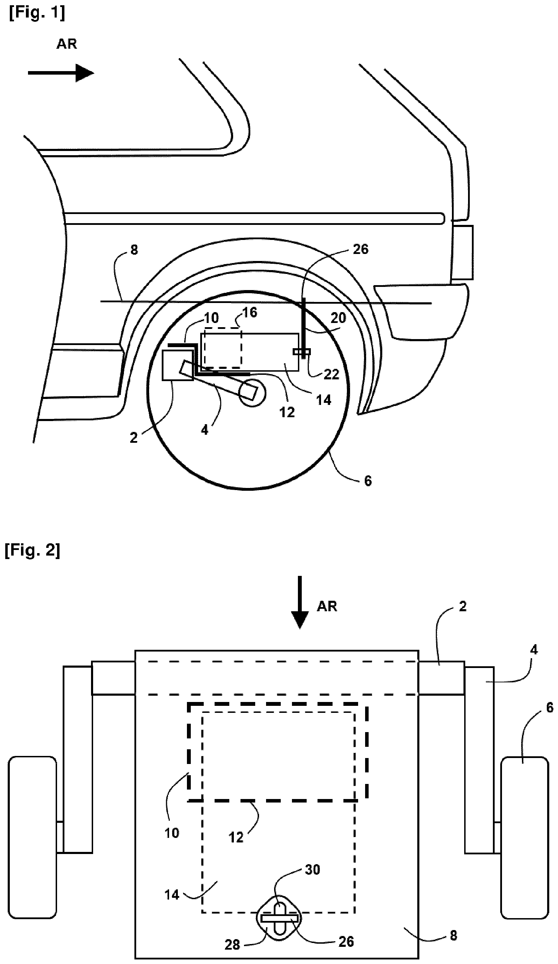

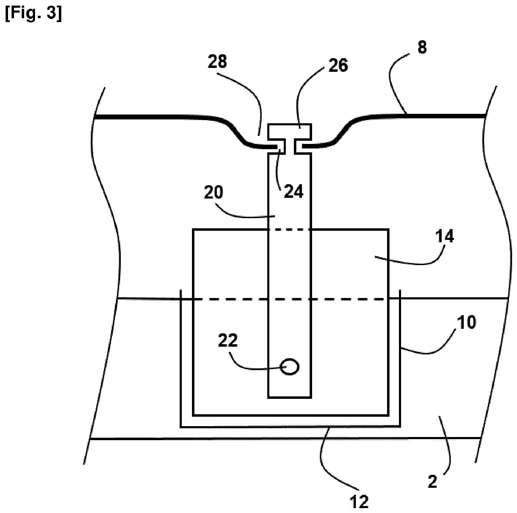

Les figures 1, 2 et 3 présentent un véhicule comprenant à l'arrière indiqué par la flèche AR, une traverse de train arrière 2 recevant à chaque extrémité un bras de suspension 4 supportant une roue 6, disposée sous une tôle de plancher 8 du coffre arrière de ce véhicule.

La traverse 2 comporte un support 10 fixé sur le dessus de cette traverse, comprenant un plateau 12 sensiblement horizontale centré au milieu du véhicule, qui se prolonge en arrière de la traverse suivant une petite longueur. Un espace formé entre la tôle de plancher 8 et le plateau 12 du support 10, permet de disposer une batterie du véhicule, en particulier une batterie de servitude 14, 16.

Le plateau 12 du support 10 peut recevoir dans une version du système électrique du véhicule, une petite batterie de servitude 16 présentant dans la direction longitudinale du véhicule une longueur supportée entièrement par ce plateau, qui est maintenue dans des bonnes conditions pour résister en particulier aux accélérations verticales lors du roulage du véhicule.

Dans une autre version du système électrique le véhicule reçoit une plus grande batterie de servitude 14 posée sur le plateau 12, présentant une partie arrière dépassant vers l'arrière de ce plateau. En particulier la petite batterie de servitude 16 peut présenter une capacité de 4Ah avec une tension de 12V, et la grande batterie une capacité plus élevée de 12Ah avec la même tension, assurant une disponibilité d'énergie plus importante.

Une barrette de soutien 20 disposée sensiblement verticalement, formée par une bande métallique plate, est fixée à l'arrière de la grande batterie 14 directement dessus ou par l'intermédiaire d'un support arrière, en venant à plat sur la face arrière de cette batterie. L'extrémité inférieure de la barrette 20 comporte un perçage prévu pour une fixation sur la batterie 14.

La tôle du plancher 8 comporte vers l'arrière un creux allongé 28 disposé suivant la direction transversale du véhicule, comprenant au fond un perçage oblong formant une fente 30 disposée suivant la direction longitudinale, qui permet de laisser passer la barrette 20 en alignant son plat suivant cette direction longitudinale.

L'extrémité supérieure de la barrette 20 comporte deux échancrures latérales symétriques 24, laissant en partie supérieure une tête 26 dépassant au-dessus de ces échancrures. La largeur de la barrette 20 au niveau des échancrures 24 est légèrement inférieure à la largeur du perçage oblong 30. La hauteur de la tête 26 de la barrette 20 est inférieure à la profondeur du creux 28, de manière à intégrer entièrement cette tête dans le creux pour qu'elle ne dépasse pas au-dessus du plan général du plancher 8.

En particulier le perçage oblong 30 au fond du creux 28 de la tôle du plancher 8, peut servir par ailleurs d'évacuation du liquide remplissant le coffre quand la caisse nue est plongée dans des bains de traitement des tôles, notamment pour un traitement cataphorèse de cette caisse après l'assemblage des tôles par soudure. De cette manière le creux 28 avec son perçage 30 réalise une double fonction, ce qui évite d'ajouter une opération supplémentaire pour former le point de fixation supérieure de la barrette 20. Le procédé de montage d'une grande batterie 14 est le suivant. Un opérateur dispose la batterie 14 au niveau du plateau 12 du support 10, puis la glisse à l'avant vers la traverse 2 pour l'installer au fond de ce plateau.

L'opérateur rentre ensuite l'extrémité supérieure de la barrette plate 20 dans le perçage oblong 30, en alignant le plat de cette barrette suivant la direction longitudinale du véhicule. L'opérateur ajuste ensuite les échancrures 24 au niveau de la tôle du fond du creux 28, puis tourne la barrette d'un quart de tour autour de son axe principal pour disposer son plat suivant la direction transversale du véhicule.

A la fin la tête 26 de la barrette 20 se trouve entièrement au fond du creux 28, avec la largeur réduite entre les deux échancrures 24 qui est calée dans la largeur du perçage oblong 30.

En dernier l'opérateur installe la fixation inférieure 22, par exemple une vis, qui est reliée à la face arrière de la grande batterie 14 ce qui soutient totalement la partie arrière de cette batterie.

On obtient un montage simple, rapide et efficace de la barrette de soutien 20, qui grâce à la fixation 22 empêchant sa rotation, garantit l'accrochage de son extrémité supérieure au plancher 8.

Dans le cas du montage d'une petite batterie 16 sur le même type de véhicule, on n'installe pas la barrette de soutien 20 qui n'est pas nécessaire.

On peut conserver une gamme de véhicules entièrement standard, comprenant un même support 10 fixé sur les traverses 2, et grâce à l'utilisation d'un perçage oblong 30 formé sur tous les planchers de coffre 8 pour l'évacuation de fluides lors de la fabrication de la caisse, ajouter si nécessaire de manière économique la barrette de soutien 20 sur certains de ces véhicules.

## Revendications

1. Véhicule automobile équipé d'une batterie (14) posée sur un support (10) fixé sur le côté d'une traverse de train arrière (2) disposée sous un plancher de coffre arrière (8) de ce véhicule, **caractérisé en ce qu'**il comporte une barrette de soutien démontable (20) comprenant une extrémité supérieure fixée au plancher de coffre (8), et une extrémité inférieure reliée à un côté de la batterie (14).

2. Véhicule automobile selon la revendication 1, **caractérisé en ce que** le support (10) comporte un plateau (12) recevant la batterie (14) qui dépasse de ce plateau (12) du côté de la barrette (20).

3. Véhicule automobile selon la revendication 2, **caractérisé en ce que** le plateau (12) étant fixé suivant la direction longitudinale du véhicule, sur le côté arrière de la traverse (2), la batterie (14) dépasse en arrière de ce plateau (12).

4. Véhicule automobile selon l'une quelconque des revendications précédentes, **caractérisé en ce que** l'extrémité supérieure de la barrette (20) est fixée à un perçage (30) d'une tôle formant le plancher du coffre (8).

5. Véhicule automobile selon la revendication 4, **caractérisé en ce que** la barrette (20) présentant une section plate, s'ajuste dans le perçage (30) qui présente une forme oblongue.

6. Véhicule automobile selon la revendication 5, **caractérisé en ce que** la partie supérieure de la barrette (20) comporte des échancrures (24) permettant une rotation de cette barrette (20) suivant son axe principal, en engageant la tôle du plancher (8) dans ces échancrures (24).

7. Véhicule automobile selon la revendication 6, **caractérisé en ce que** la tôle du plancher (8) comporte un creux (28) qui reçoit entièrement la tête supérieure (26) de la barrette (20) au-dessus des échancrures (24) après sa rotation.

8. Véhicule automobile selon l'une quelconque des revendications 4 à 7, **caractérisé en ce que** le perçage (30) constitue un trou d'évacuation d'un fluide lors de traitements de la caisse du véhicule après son assemblage.

9. Véhicule automobile selon l'une quelconque des revendications précédentes, **caractérisé en ce que** la batterie (14) constitue une batterie de servitude du système électrique du véhicule qui s'ajoute à une batterie du réseau de bord.

10. Procédé de montage d'une batterie (14) sur un véhicule selon l'une quelconque des revendications précédentes, **caractérisé en ce qu'**on glisse la batterie (14) sur un plateau (12) du support (10), on introduit ensuite une barrette plate (20) dans un perçage oblong (30) du plancher du coffre arrière (8), puis on tourne la barrette (20) suivant son axe principal pour ajuster des bords du perçage (30) dans des échancrures de la barrette (24), et enfin on fixe la partie inférieure de la barrette (20) sur la batterie (14).

## Patentansprüche

1. Kraftfahrzeug , das mit einer Batterie (14) ausgestattet ist, die auf einem Träger (10) angeordnet ist, der an der Seite eines Hinterachsquerträgers (2) befestigt ist, der unter einem hinteren Kofferraumboden (8) dieses Fahrzeugs angeordnet ist, **dadurch gekennzeichnet, dass** es einen abnehmbaren Träger umfasst Stange (20), umfassend ein oberes Ende, das am Kofferraumboden (8) befestigt ist, und ein unteres Ende, das mit einer Seite der Batterie (14) verbunden ist.

2. Kraftfahrzeug nach Anspruch 1, **dadurch gekennzeichnet, daß** der Träger (10) eine die Batterie (14) aufnehmende Platte (12) aufweist, die von dieser Platte (12) auf der Seite des Holms (20) absteht.

3. Kraftfahrzeug nach Anspruch 2, **dadurch gekennzeichnet, daß** die Platte (12) in Fahrzeuglängsrichtung an der Rückseite des Querträgers (2) befestigt ist und die Batterie (14) hinter dieser Platte (12) hervorsteht.

4. Kraftfahrzeug nach einem der vorhergehenden Ansprüche, **dadurch gekennzeichnet, daß** das obere Ende der Stange (20) an einer Bohrung (30) eines Blechs befestigt ist, das den Boden des Kofferraums (8) bildet.

5. Kraftfahrzeug nach Anspruch 4, **dadurch gekennzeichnet, daß** die im Querschnitt flache Leiste (20) in die länglich geformte Bohrung (30) paßt.

6. Kraftfahrzeug nach Anspruch 5, **dadurch gekennzeichnet, dass** der obere Teil der Stange (20) Kerben (24) aufweist, die eine Drehung dieser Stange (20) entlang ihrer Hauptachse ermöglichen, indem sie mit dem Blech des Bodens (8) in diese eingreifen Vertiefungen (24).

7. Kraftfahrzeug nach Anspruch 6, **dadurch gekennzeichnet, daß** die Bodenplatte (8) eine Ausnehmung (28) aufweist, die den oberen Kopf (26) der Stange (20) oberhalb der Kerben (24) nach ihrer Drehung vollständig aufnimmt.

8. Kraftfahrzeug nach einem der Ansprüche 4 bis 7, **dadurch gekennzeichnet, daß** die Bohrung (30) ein Austrittsloch für ein Fluid während der Behandlung der Fahrzeugkarosserie nach ihrem Zusammenbau bildet.

9. Kraftfahrzeug nach einem der vorhergehenden Ansprüche, **dadurch gekennzeichnet, dass** die Batterie (14) eine Betriebsbatterie des Bordnetzes des Fahrzeugs darstellt, die einer Batterie des Bordnetzes hinzugefügt ist.

10. Verfahren zum Montieren einer Batterie (14) an einem Fahrzeug nach einem der vorhergehenden Ansprüche, **dadurch gekennzeichnet, dass** die Batterie (14) auf eine Platte (12) des Trägers (10) geschoben wird, dann auf eine flache Stange (20) in einem Langloch (30) des hinteren Kofferraumbodens (8), dann wird die Stange (20) entlang ihrer Hauptachse gedreht, um die Kanten des Lochs (30) in die Vertiefungen der Stange (24) einzustellen, und schließlich der untere Teil der Stange (20) ist an der Batterie (14) befestigt.

## Claims

1. Motor vehicle equipped with a battery (14) placed on a support (10) fixed to the side of a rear axle cross member (2) placed under a rear boot floor (8) of this vehicle, **characterized in that** it comprises a removable support strip (20) comprising an upper end fixed to the boot floor (8), and a lower end connected to one side of the battery (14).

2. Motor vehicle according to claim 1, **characterized in that** the support (10) comprises a plate (12) receiving the battery (14) which protrudes from this plate (12) on the side of the strip (20).

3. Motor vehicle according to claim 2, **characterized in that** the plate (12) being fixed in the longitudinal direction of the vehicle, on the rear side of the crosspiece (2), the battery (14) protrudes behind this plate (12).

4. Motor vehicle according to any one of the preceding claims, **characterized in that** the upper end of the bar (20) is fixed to a bore (30) of a sheet forming the floor of the boot (8).

5. Motor vehicle according to claim 4, **characterized in that** the strip (20) having a flat cross-section fits into the bore (30) which has an oblong shape.

6. Motor vehicle according to Claim 5, **characterized in that** the upper part of the bar (20) comprises notches (24) allowing rotation of this bar (20) along its main axis, by engaging the sheet metal of the floor (8) in these indentations (24).

7. Motor vehicle according to claim 6, **characterized in that** the floor plate (8) has a recess (28) which completely receives the upper head (26) of the bar (20) above the notches (24) after its rotation.

8. Motor vehicle according to any one of claims 4 to 7, **characterized in that** the bore (30) constitutes an evacuation hole for a fluid during treatments of the body of the vehicle after its assembly.

9. Motor vehicle according to any one of the preceding claims, **characterized in that** the battery (14) constitutes a service battery of the electrical system of the vehicle which is added to a battery of the on-board network.

10. Method of mounting a battery (14) on a vehicle according to any one of the preceding claims, **characterized in that** the battery (14) is slid onto a plate (12) of the support (10), then a flat bar (20) in an oblong hole (30) of the rear trunk floor (8), then the bar (20) is turned along its main axis to adjust the edges of the hole (30) in the indentations of the bar (24), and finally the lower part of the bar (20) is fixed on the battery (14).
